Europäisches Patentamt

European Patent Office

Office européen des brevets

(19)

(11) EP 0 579 546 B1

(12) **FASCICULE DE BREVET EUROPEEN**

(45) Date de publication et mention
de la délivrance du brevet:
**27.12.1996 Bulletin 1996/52**

(51) Int Cl.6: **C08L 3/00**, C08L 67/04,
C08L 3/12

(21) Numéro de dépôt: **93401824.3**

(22) Date de dépôt: **15.07.1993**

(54) **Composition thermoformable, son procédé de préparation et son utilisation pour l'obtention d'articles thermoformés**

Durch Wärme formbare Zusammensetzung, Verfahren zu ihrer Herstellung und ihre Anwendung zur Herstellung von thermogeformten Gegenständen

Thermoformable composition, process for its preparation and its use for obtaining thermoformed articles

(84) Etats contractants désignés:
**AT BE CH DE DK ES FR GB GR IE IT LI NL PT SE**

(30) Priorité: **15.07.1992 FR 9208730**

(43) Date de publication de la demande:
**19.01.1994 Bulletin 1994/03**

(73) Titulaire: **Roquette Frères**
**F-62136 Lestrem (FR)**

(72) Inventeurs:
• **Fleche, Guy**
**F-59190 Hazebrouck (FR)**
• **Gosset, Serge**
**F-62136 Lestrem (FR)**

• **Videau, Didier**
**F-59000 Lille (FR)**

(74) Mandataire: **Ahner, Francis**
**CABINET REGIMBEAU**
**26, avenue Kléber**
**75116 Paris (FR)**

(56) Documents cités:
EP-A- 0 444 880          EP-A- 0 497 706
EP-A- 0 530 987          EP-A- 0 533 314
US-A- 3 850 863

• **DATABASE WPI Week 9042, Derwent Publications Ltd., London, GB; AN 90-315322 & JP-A-2 222 421 (CHUKO KASEI KOGYO) 05 Septembre 1990**

## Description

La présente invention a pour objet une nouvelle composition thermoformable biodécomposable ou biodésintégrable. Elle vise également un nouveau procédé de préparation de ladite composition thermoformable ainsi que l'utilisation de cette composition en vue de l'obtention d'articles thermoformés.

La préparation d'articles de formes déterminées et en particulier les techniques de thermoformage, c'est-à-dire de réalisation de formes par action de la température, font largement appel à des matériaux synthétiques tels que le polyéthylène, le polypropylène, le polystyrène ou le polychlorure de vinyle. Ces matériaux synthétiques sont, à titre d'exemples, utilisés pour la préparation d'articles de toutes formes (feuilles, tubes, joncs ou formes plus élaborées) et destinations, tels que les emballages (sacs poubelle ou conteneurs), les paillis de culture, les bouteilles, certains articles de consommation (verres, draps) etc..

Cependant, ces matériaux synthétiques commencent à susciter de sérieux problèmes d'environnement, étant donné leur lente disparition dans les différents systèmes écologiques où leur dégradation ne survient souvent qu'après plusieurs dizaines d'années.

Des opérations faisant appel au recyclage et à l'incinération permettent déjà aujourd'hui de limiter les effets néfastes des rejets constitués par les matières plastiques synthétiques. Le développement et l'optimisation de ces opérations conduira à une baisse notable de la pollution. De même, il a été proposé des solutions pour accélérer la dégradation des polymères de synthèse par photooxydation. Des additifs à base d'acides gras insaturés associés à des métaux lourds par exemple, conduisent, sous l'action de la lumière, à la dégradation de la macromolécule synthétique selon un mécanisme radicalaire. Les petites chaînes ainsi obtenues favorisent la dispersion du matériau et son élimination dans le milieu naturel. Cependant, les photométabolites et les métaux lourds peuvent occasionnellement poser des problèmes de pollution.

D'autres solutions reposent sur le principe de la biodégradation d'éléments biodégradables introduits dans un polymère aux fins de former ce qu'il est convenu d'appeler un plastique dégradable. Aussi, plusieurs méthodes vont caractériser cette démarche qui, dans une large mesure, fait appel à l'amidon en tant qu'élément biodégradable. Ce polymère a l'avantage d'être une source de matière première renouvelable annuellement et biodégradable sous l'action des enzymes secrétées par les microorganismes tels que bactéries ou moisissures. Globalement, ces méthodes se divisent en trois groupes selon la technique de mise en oeuvre de l'amidon.

Une première technologie, par exemple décrite dans le brevet FR 2 252,385, consiste à introduire dans une matière polyoléfinique, constituée notamment par le polyéthylène, des granules d'amidon à un taux compris généralement entre 5 et 30 % plus particulièrement de l'ordre de 15 %. L'amidon y joue un rôle de charge uniformément dispersée dans la matière polyéthylènique. Aucune interaction n'intervient entre l'amidon très hydrophile et le polymère très hydrophobe. L'amidon est ajouté soit directement dans le polyéthylène, soit plus couramment par le biais d'un mélange maître pouvant renfermer jusque 50 % d'amidon. L'amidon est en général déshydraté (humidité inférieure à 1 %) et une variante du procédé, décrite dans le brevet GB 1.487 050, envisage l'enrobage préalable du granule par des groupes silylés hydrophobes afin d'augmenter la compatibilité amidonpolyéthylène. On ajoute parfois à l'amidon un système inducteur de photodégradation permettant alors de combiner bio et photodégradations.

L'amidon apporte des propriétés fonctionnelles particulières telles qu'anti-blocage, meilleure imprimabilité, antistatisme ... dans les articles moulés ou filmés, avec cependant, une réduction des propriétés mécaniques dans le cas des films.

Une deuxième technologie, par exemple décrite dans les brevets EP 0 032 802 et EP 0 132 299, consiste, en vue de l'obtention de films flexibles, à introduire une phase continue d'amidon dans un polymère de synthèse afin de constituer une structure que l'on pourrait qualifier de composite. Le granule d'amidon désintégré par gélatinisation ou extrusion est, comme décrit dans le brevet EP 0 032 802, dispersé dans un polymère synthétique de nature hydrophile tel que le copolymère d'éthylène-acide acrylique (EAA), partiellement neutralisé, en présence éventuellement d'un plastifiant tel que le glycérol ou l'éthylène glycol. Cette technique autorise une introduction de 50 à 60 % d'amidon. Le composite amidonpolymère synthétique ainsi obtenu est présenté comme permettant de fabriquer des films extrudés dont la résistance mécanique est améliorée et montrant une meilleure biodégradabilité. Dans ce système, l'amidon est gélatinisé en présence d'eau et l'humidité du mélange doit être abaissée dans la plage 2-10 % avant les opérations de moulage ou d'extrusion.

Compte tenu des quantités maximales d'eau ainsi requises, il est décrit comme généralement nécessaire d'effectuer au moins deux passages des compositions sur extrudeuse ce qui rend cette technologie complexe et coûteuse en énergie et apparemment difficilement extrapolable à une production continue d'articles contenant de fortes proportions d'amidon.

En outre, selon les indications du brevet EP 32802 susmentionné, la présence de 30 à 40 % en poids d'amidon au sein du composite impose la mise en oeuvre du polyéthylène (10 à 40 %) en vue de renforcer les propriétés mécaniques des films obtenus.

Les deux technologies susdécrites font, en toute généralité appel à des mélanges d'amidon et de résines synthétiques.

La troisième technologie, décrite en particulier dans les brevets EP 118 240 et EP 326 517, vise quant à elle l'obtention de matière thermoformable à base essentiellement d'amidon. Pour atteindre ce but, l'amidon doit se présenter sous la forme de granules déstructurés par fusion. Sa mise en oeuvre peut alors se réaliser sur les équipements conventionnels de transformation des matières plastiques. Il y a lieu généralement d'ajouter, au cours de ce traitement, un système plastifiant à l'amidon.

Il a également été décrit, par exemple dans le brevet EP 327 505 d'associer un amidon déstructuré à des polymères thermoplastiques de synthèse insolubles dans l'eau.

Néanmoins, la fabrication d'une matière thermoformable à forte teneur en amidon telle que décrite dans le brevet EP 118.240 impose des gammes de température et de pression plutôt élevées (température supérieure à 120 ° C et pression de plusieurs centaines de bars) pour satisfaire aux conditions de transformation en machine d'injection.

En vue d'améliorer les conditions de mise en oeuvre du matériau amylacé, il a été préconisé, comme décrit dans le brevet EP 282.451, de déstructurer l'amidon à température élevé (de préférence 160 à 185 °C) en présence d'un catalyseur de dépolymérisation de l'amidon, ledit catalyseur, par exemple l'acide chlorhydrique, devant permettre de réduire la masse moléculaire moyenne de l'amidon d'un facteur de 2 à 5 000.

Les articles, en particulier les capsules, obtenus après moulage et refroidissement sont par nature biodégradables mais sont par contre rigides, très fragiles et hygroscopiques, et leurs propriétés mécaniques varient avec leur teneur en eau.

Il est d'ailleurs souvent proposé, pour diminuer cette sensibilité à l'eau ou pour modifier les propriétés finales du matériau amylacé, de l'associer à un ou plusieurs additifs choisis, en particulier, parmi :

- les agents hydrophiles et par exemple, la gélatine, les protéines, les polysaccharides hydrosolubles.
- les agents de charge minéraux et par exemple les oxydes de magnésium, d'aluminium ou de titane,
- les agents plastifiants et par exemple le polyéthylène glycoL

Toutefois, aucune des susdites dispositions ne permet d'obtenir un article thermoformé à partir de l'un des systèmes amylacés proposés par l'art antérieur qui réponde à toutes les exigences de la technique, à savoir notamment un comportement thermoplastique, une résistance à l'eau et une biodégradabilité totale.

Les palliatifs proposés par l'art antérieur ont consisté à introduire, à des teneurs inférieures à 20 % en poids de la matière amylacée, un polymère thermoplastique de synthèse afin d'améliorer les problèmes de résistance à l'eau mais ont concouru à une perte du caractère biodégradable desdits articles. Aussi pour améliorer concomitamment la résistance à l'eau desdits produits et leur biodégradabilité, il a été aussi proposé d'utiliser des polyesters tels que les polymères d'acide lactique comme décrit dans le brevet US 2.703.316 ou de mettre en oeuvre des polymères d'hydroxyacides tels que l'EVA ou les copolymères éthylène - anhydride maléique par exemple comme décrit dans les brevets WO 92/04410 et WO 92/04412. Les articles ainsi obtenus demeurent néanmoins non biodégradables à 100 %.

Le brevet WO 91/06601 revendique l'emploi de certains polyesters tels que l'acide polylactique et la polycaprolactone comme accélérateur de dégradation.

Le brevet EP 282 368 mentionne la fabrication, par calandrage à des températures de 120-160°C, de films à base de polyuréthanne, associé préférentiellement à un polyester aliphatique telle que la polycaprolactone (PCL), à un hydrate de carbone tel que de la fécule de pomme de terre et à du PVC et ce, en présence d'un plastifiant monomérique ou polymérique du PVC, notamment du dioctylphtalate (DOP).

Il est dit que le polyester aliphatique permet, entre autres, de faciliter la mise en oeuvre et d'augmenter la biodégradabilité des produits (films) obtenus, en regard d'articles selon l'art antérieur associant polyuréthanne et amidon. Les compositions mises en oeuvre comprennent ainsi, selon les enseignements de ce brevet, des proportions relativement peu élevées en hydrate de carbone (10 à 45% par rapport au mélange global) et il n'est pas prévu l'incorporation, au sein desdites compositions, d'un agent particulier apte à plastifier l'hydrate de carbone, en particulier l'amidon.

Le brevet EP 0 444 880 décrit l'association, à haute température, d'une résine biodécomposable telle que la polycaprolactone ou le polyhydroxybutyrate (PHB) et d'une substance naturelle de haut poids moléculaire telle que par exemple un amidon de mais et ce, en présence éventuellement d'une résine non biodécomposable telle que le polyéthylène. Cette association se fait en l'absence d'agent apte à plastifier ladite substance naturelle, cette dernière n'étant pas appréhendée en tant que matière plastique mais plutôt comme une charge représentant au maximum 70% des compositions décrites. Les articles moulés issus de telles compositions, qualifiables de matériaux composites, ne peuvent être que biofragilisables et ne sont pas totalement biodégradables. En outre, il apparait que les articles contenant au moins 25% en poids de substance naturelle sont hygroscopiques et nécessitent, pour ne pas subir une altération de leurs propriétés mécaniques, l'application en surface d'un film de nature hydrophobe.

Le brevet japonais JP 4 146 953 envisage la mise en oeuvre d'une charge de nature aussi bien minérale qu'organique en vue d'empêcher la biodégradation prématurée d'articles à base de polyesters aliphatiques.

Les amidons et copolymères d'amidon et d'acétate de vinyle sont, entre autres, cités en tant que charges organiques permettant de retarder et de contrôler la biodégradabilité de polyesters tels que notamment la polycaprolactone (PCL) et les polyhydroxybutyrates (PHB). Il n'est pas fait référence à des agents particuliers aptes à plastifier les amidons.

Le brevet japonais JP 4 168 150 vise l'obtention, par technique de coulage / évaporation, de films plastiques à base de polymères hydrolysables, et notamment de polymères d'hydroxy-acides tels que les acides lactique, maléique et glycolique, présentant de bonnes propriétés mécaniques et qui soient biodégradables après usage. En vue d'augmenter cette biodégradabilité, le polymère hydrolysable, solubilisé dans un solvant particulier, est associé à un milieu de culture apte à permettre la croissance des microorganismes dégradant ledit polymère. Un tel milieu de culture, incorporé à de faibles taux (0,01 à 10% / poids de polymère) peut notamment être constitué d'une association entre extrait de levure, peptone, glucose et amidon, ce dernier étant ici considéré comme une source de carbone et aucunement comme une matière potentiellement thermoplastique.

Le brevet WO 92/19680 décrit l'obtention, par extrusion ou moulage par soufflage, à hautes températures, d'une masse fondue associant, généralement en présence de copolymère éthylène / acétate de vinyle (EVA), de la polycaprolactone (PCL) ou un copolymère à base de polycaprolactone, un amidon et de la glycérine en tant qu'agent plastifiant. Les articles obtenus sont présentés comme ayant une bonne biodégradabilité, de bonnes propriétés mécaniques et/ou de résistance à l'eau, une faible perméabilité à la vapeur d'eau. Cependant, le procédé d'obtention de la masse fondue finale est relativement complexe prévoyant généralement la mise en oeuvre de la PCL qu'après une première étape d'extrusion, (avec obligation de dégazer) et la préparation de pellets intermédiaires à base du composé amylacé.

Le brevet EP 0 530 987 décrit l'obtention, par extrusion à hautes températures (en pratique 190°C) de compositions biodégradables associant des homopolymères ou copolymères à base d'acide lactique particuliers, à savoir présentant un poids moléculaire de 50 000 à 1 000 000, et de l'amidon de maïs, en présence, de préférence, d'oléate d'éthyle pour améliorer la compatibiblté polylactate / amidon.

Il apparait que les tentatives faites jusqu'à ce jour d'exploiter des compositions associant un polyester biodégradable et un composé amylacé ont, d'une manière générale :

- soit utilisé ledit composé amylacé comme simple agent de charge ou comme source de carbone et non comme matière potentiellement thermoplastique, les articles résultant desdites compositions se présentant le plus souvent comme des matériaux composites, uniquement biofragilisables et non entièrement biodégradables,
- soit fait appel à des moyens complexes et/ou obligatoirement coûteux en énergie, en vue de véritablement mettre à profit le caractère thermoplastique dudit composé amylacé.

En outre, la sensibilité à l'eau et/ou les mauvaises caractéristiques mécaniques inhérentes aux composés amylacés ainsi que la compatibilité parfois mauvaise entre composés amylacés et polyesters n'ont pas permis jusqu'à ce jour d'appliquer de telles compositions à la fabrication industrielle d'une large gamme d'articles thermoformés.

Ainsi, il résulte de ce qui précède qu'il existait un besoin de trouver un moyen d'obtention simple, peu coûteux, notamment en énergie d'une matière thermoformable, qui soit biodégradable et qui soit applicable à la fabrication d'une large gamme d'articles thermoformés et qui n'engendre pas de réels problèmes de non résistance à l'eau.

Et le mérite de la Société Demanderesse est d'avoir trouvé que, de façon surprenante et inattendue, un tel moyen pouvait être constitué par l'association, en présence ou non d'autres constituants, d'au moins un composé amylacé d'au moins un polyester biodégradable et d'au moins un sel d'acide hydroxycarboxylique.

Plus précisément, la présente invention a pour objet une composition thermoformable biodécomposable ou biodésintégrable caractérisée par le fait qu'elle contient :

- au moins un composé amylacé,
- au moins un polyester biodégradable, et
- au moins un sel d'acide hydroxycarboxylique.

Un premier aspect particulièrement avantageux de l'invention réside dans le fait que le composé amylacé contenu au sein de ladite composition thermoformable peut être mis en oeuvre dans des conditions de température et/ou de pression significativement moins sévères que celles généralement requises dans la pratique industrielle et donc plus favorables au maintien de ses propriétés intrinsèques.

En suite de quoi, le composé amylacé contenu au sein de la composition thermoformable objet de l'invention peut avantageusement se présenter, comme précisé ci-avant, dans un état que l'on peut qualifier de "fondu partiel".

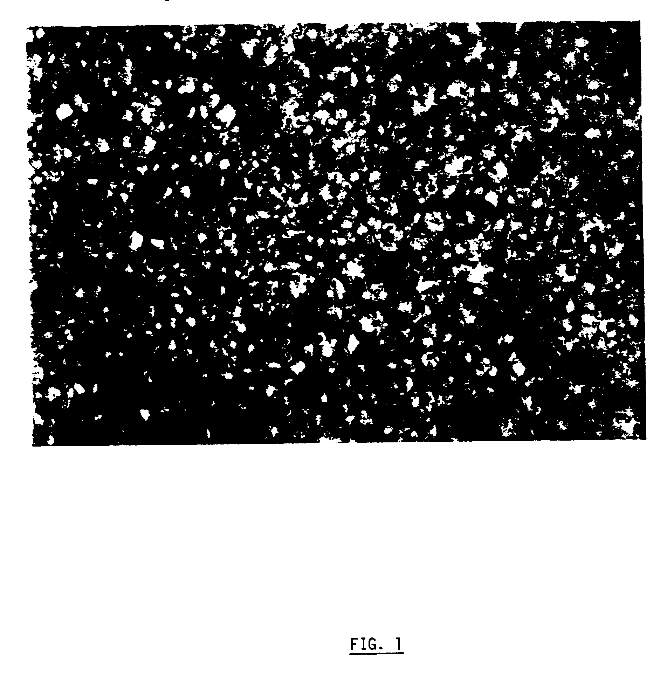

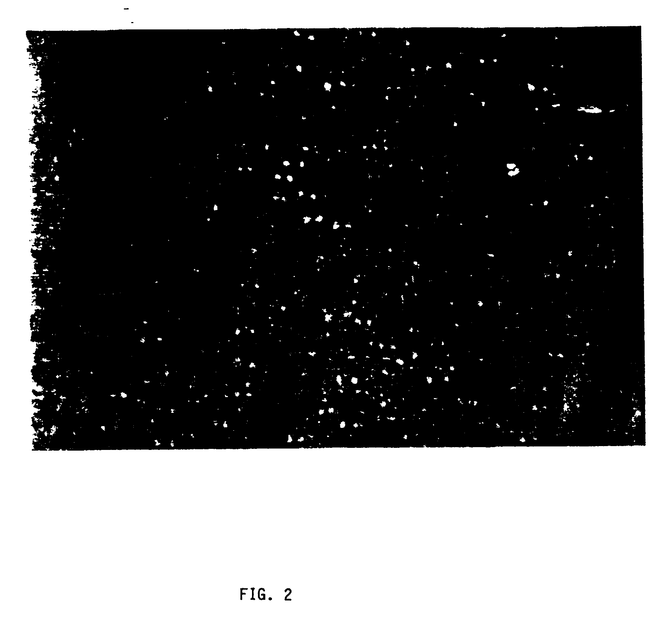

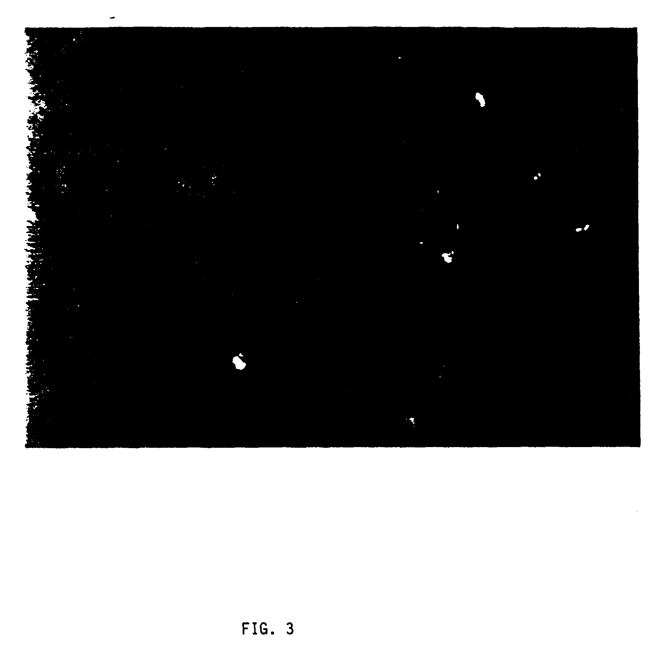

Cet état partiellement fondu se différencie de la gélatinisation de l'amidon et de sa fusion totale ou destructuration. La gélatinisation de l'amidon, qui est obtenue grâce à l'utilisation d'une forte proportion d'eau, conduit à l'obtention de dispersions colloïdales. En revanche, la fusion totale ou destructuration de l'amidon est essentiellement obtenue par traitement thermique et conduit à la disparition complète des grains d'amidon comme, par exemple, observé au microscope sur des articles thermoformés à base de composition NOVON®, laquelle est commercialisée par WARNER-LAMBERT COMPANY (cf figure 3 en annexe). L'état fondu partiel correspond à un état intermédiaire dans lequel on observe une destruction au moins partielle des liaisons hydrogène intermoléculaires avec l'établissement de nouvelles liaisons hydrogène entre l'eau et les groupes hydroxyles de l'amidon. Dans cet état intermédiaire on observe la persistance d'une certaine proportion de granules d'amidon tel qu'illustré par les figures 1 et 2 en annexe.

Un second aspect particulièrement avantageux de l'invention réside dans la très grande versatilité des compositions thermoformables conformes à l'invention lesquelles permettent obtenir, y compris pour un dispositif de thermoformage et des paramètres opératoires donnés des articles formés présentant une très large gamme de propriétés mécaniques, notamment en termes de viscoélasticité.

La Société Demanderesse a d'ailleurs trouvé qu'un moyen efficace et original d'estimation desdites propriétés mécaniques pouvait consister en l'utilisation de la technique dite d'Analyse Mécanique Dynamique, laquelle sera détaillée ci-après au niveau des exemples.

Il convient simplement de souligner à cet endroit de la description que la technique d'Analyse Mécanique Dynamique permet de déterminer la variation du facteur de perte tgδ d'un matériau donné dans une gamme de températures et en particulier de connaître la température à laquelle ledit matériau, qui est testé sous la forme d'un échantillon de dimensions données, présente un facteur de perte tgδ maximum. La température ainsi déterminée permet d'approcher la température de transition vitreuse dudit matériau.

Il est remarquable de souligner que les compositions conformes à l'invention permettent d'obtenir des articles thermoformés présentant un facteur de perte tgδ maximum se situant dans une très large gamme de températures, notamment entre 0 et 160°C c'est-à-dire dans la gamme englobant les températures de transition vitreuse de la plupart des polymères de synthèse traditionnels.

De façon avantageuse, la composition thermoformable objet de l'invention, qui contient au moins un composé amylacé, de préférence partiellement fondu, au moins un polyester biodégradable et au moins un sel d'acide hydroxycarboxylique, se caractérise en outre par le fait qu'elle est apte à fournir un article thermoformé présentant un facteur de perte tgδ dont la valeur maximum se situe à une température au plus égale à 150°C, notamment entre 0 et 130°C environ.

Par le terme composé amylacé, au sens de la présente invention, on entend tout type d'amidon, qu'elle qu'en soit l'origine, natif ou modifié et ce, par voie chimique et/ou physique. Lorsqu'on fait appel à un amidon natif pour la constitution des compositions conformes à l'invention, celui-ci est notamment choisi dans le groupe comprenant les amidons natifs, naturels ou hybrides, provenant du mais, du maïs à haute teneur en amylopectine (amidon waxy), du maïs à haute teneur en amylose, du blé, du riz, du pois, de la pomme de terre, du manioc, les coupes ou fractions qui peuvent en être faites ou obtenues et les mélanges quelconques d'au moins deux quelconques des produits susmentionnés.

Lorsqu'on fait appel à un amidon modifié chimiquement pour la constitution des compositions conformes à l'invention, celui-ci est notamment choisi dans le groupe comprenant les amidons modifiés par au moins l'une ou l'autre des techniques connues d'éthérification, d'estérification, de réticulation, d'oxydation, de traitement alcalin, d'hydrolyse acide et/ou enzymatique.

On peut, à titre d'exemple, faire appel avantageusement à des amidons éthérifiés par des groupements ioniques, en particulier cationiques, ou non icniques, ces derniers pouvant consister en des amidons hydroxyalkylés tels que des amidons hydroxypropylés ou hydroxyéthylés.

Par les termes "polyester biodégradable", au sens de la présente invention on entend plus particulièrement un produit choisi dans la liste comprenant :

- l'acide polylactique (PL),
- l'acide polyglycolique (PG),
- l'acide polyhydroxybutyrique (PHB),
- l'acide polyhydroxypropionique (PHP),
- l'acide polyhydroxyvalérianique (PHV),
- les copolymères de deux au moins des produits susmentionnés,
- les dérivés et sels de l'ensemble de ceux-ci, tels que les sels d'acide polylactite ou polylactates comme, par exemple, les polylactates de sodium.

On peut également faire appel à des produits obtenus par copolymérisation de motifs lactides et de motifs glycolides et/ou deltavalérolactone.

De tels polyesters sont notamment décrits dans la demande de brevet WO 90/01521, en particulier de la ligne 13 page 4 à la ligne 18 page 10, ce passage étant incorporé à la présente description.

Par les termes "acide polylactique" on entend, entre autres, et sans que cette définition ne soit la moins limitative, tous les polymères et oligomères à base d'acide D et/ou L lactique présentant un poids moléculaire inférieur à 1 000 000, notamment inférieur à 150 000 et en particulier les oligomères d'acide D et/ou L lactique présentant un poids moléculaire d'environ 500 à environ 5 000.

Dans le cadre de la présente invention, on entend par "acide hydroxycarboxylique" tout acide comportant au moins une fonction hydroxyle et au moins une fonction carboxylique.

Cette définition s'applique notamment à des acides de type :

- monohydroxy/monocarboxylique tels que les acides lactique, glycolique ou hydroxybutyrique,
- monohydroxy/polycarboxylique tels que les acides citrique, isocitrique, malique ou tartronique,
- polyhydroxy/monocarboxylique tels que les acides gluconique, maltobionique, lactobionique, glucuronique, glycérique, ribonique, xylonique, galactonique ou mévalonique.
- polyhydroxy/polycarboxylique tels que les acides tartrique, mésoxalique ou glucarique,
- les mélanges quelconques d'au moins deux quelconques desdits acides tels que, par exemple, les hydrolysats d'amidon oxydés pouvant contenir, entre autres et dans des proportions variables, de l'acide gluconique et de l'acide maltobionique, et notamment les sirops de glucose oxydés (SGO)

Le sel d'acide hydroxycarboxylique auquel il est fait appel dans la composition objet de l'invention, peut en particulier être choisi dans le groupe comprenant les sels d'acides monohydroxy/monocarboxyliques et les sels d'acides polyhydroxy/monocarboxyliques, notamment les sels de l'acide lactique, de l'acide gluconique, de l'acide maltobionique, de l'acide lactobionique ou de l'acide glycérique, ainsi que les mélanges quelconques d'au moins deux quelconques desdits sels.

Les sels utilisés sont préférentiellement ceux associant l'acide hydroxycarboxylique à un métal alcalin ou alcalino-terreux, en particulier à un métal choisi dans le groupe comprenant le sodium, le potassium, le calcium et le magnésium. En vue d'améliorer l'aptitude au vieillissement et/ou encore la résistance à l'eau d'articles thermoformés obtenus à partir des compositions selon l'invention, celles-ci pourront notamment contenir un sel de potassium d'un acide hydroxycarboxylique.

De façon tout à fait avantageuse, la composition conforme à l'invention contient, en tant que sel d'acide hydroxycarboxylique, au moins un sel de l'acide lactique, en particulier un sel de métal alcalin ou alcalino-terreux de l'acide lactique et notamment du lactate de sodium ou du lactate de potassium.

Il convient de noter que le sel d'acide hydroxycarboxylique pourra, bien que cela ne soit pas préféré, être généré "in situ" c'est-à-dire par mise en présence, au sein de la composition conforme à l'invention d'un acide hydroxycarboxylique tel que l'acide lactique, et d'une base appropriée (soude, potasse, chaux, amine) en prenant soin d'éviter, à l'encontre des enseignements du brevet EP-A-O 282 451 susmentionné, toute catalyse acide apte à dépolymériser substantiellement le composé amylacé.

En ce qui concerne le rapport pondéral entre composé(s) amylacé(s) et polyester(s) biodégradable(s) au sein des compositions selon l'invention, celui-ci sera généralement compris entre 99/1 et 1/99. Dans cette large gamme, l'homme de métier sera généralement en mesure de trouver, par des tests de routine, les rapports composé(s) amylacé(s) / polyester(s) biodégradable(s) les mieux adaptés à la mise en oeuvre d'une opération de thermoformage, par exemple d'extrusion, qui soit véritablement applicable industriellement.

C'est ainsi qu'en pratique, lorsque la composition conforme à l'invention est à base de polyesters, et notamment de polymère(s) d'acide lactique ou de leurs sels, présentant un poids moléculaire égal ou supérieur à 150 000 environ, ladite composition présente un rapport pondéral entre composé(s) amylacé(s) d'une part et polyester(s) biodégradable (s) d'autre part compris, de préférence, entre 90/10 et 10/90 et encore plus préférentiellement entre 80/20 et 50/50 étant précisé qu'il est tenu compte des poids secs mis en oeuvre.

De même, en pratique, lorsque la composition conforme à l'invention est à base de polyester(s), et notamment de polymère(s) ou d'oligomère(s) d'acide lactique ou de leurs sels, présentant un poids moléculaire inférieur à 150 000 environ, ladite composition présente un rapport pondéral entre composé(s) amylacé(s) d'une part et polyester(s) biodégradable(s) d'autre part, de préférence compris entre 99/1 et 70/30.

Dans le cas particulier où la composition selon l'invention est à base de polymère(s) ou oligomère(s) d'acide lactique, ou de leurs sels, présentant un poids moléculaire inférieur à environ 50 000, se situant notamment entre environ 500 à environ 5 000 et en particulier entre 800 et 3 000, ladite composition présente, en outre, un rapport pondéral entre composé(s) amylacé(s) d'une part et polyester(s) biodégradable(s) se situant encore plus préférentiellement entre 98/2 et 80/20.

Toujours selon un mode préférentiel de l'invention, on fera par exemple avantageusement appel à des amidons à haute teneur en amylose, natifs ou modifiés, notamment quand les compositions conformes à l'invention feront appel à des quantités réduites d'agents plastifiants ou encore à de faibles quantités de polyesters biodégradables, dans le cas particulier où l'on souhaitera conserver une forte biodégradabilité auxdites compositions, celles-ci ayant, de toute façon, une résistance à l'eau améliorée du fait de la présence desdits polyesters. Par contre, l'invention fera avantageusement appel à des amidons à haute teneur en amylopectine dans les autres cas.

De préférence, la composition conforme à l'invention présente un rapport pondéral entre la somme composé(s) amylacé(s) + polyester(s) biodégradable(s) d'une part et sel(s) d'acide hydroxycarboxylique d'autre part compris entre environ 99/1 et 25/75 et plus préférentiellement entre 98/2 et 40/60, étant précisé qu'il est tenu compte des poids secs mis en oeuvre.

Outre la présence caractéristique d'au moins un composé amylacé, d'au moins un polyester biodégradable et d'au moins un sel d'acide hydrocarboxylique, la composition selon invention peut contenir un ou plusieurs adjuvants de toutes natures et fonctions (agents d'extension ou de charge, plastifiants, lubrifiants, agents colorants ou autres), étant entendu que la présence desdits adjuvants ne doit pas nuire significativement au caractère biodécomposable ou biodésintégrable de ladite composition. En règle générale, lesdits adjuvants, lorsqu'ils sont présents, représentent globalement d'environ 0,5 % en poids jusqu'à environ 30 % en poids de la composition.

Cette dernière peut notamment contenir, sans que cette liste soit limitative :

- un ou plusieurs adjuvants choisis dans le groupe comprenant l'urée et ses dérivés, les sucres hydrogénés tels que le sorbitol, le mannitol, le maltitol, le lactitol et les produits pouvant en contenir tels que les hydrolysats d'amidon hydrogénés, les glycols, les polyéthylène et polypropylène glycols, le glycérol et ses dérivés, les tensio-actifs anioniques ainsi que les mélanges quelconques d'au moins deux quelconques desdits adjuvants.
- une ou plusieurs charges minérales telles que les oxydes de titane, silice ou aluminium, le talc, le carbonate de calcium et leurs mélanges,
- un ou plusieurs agents hydrofugeants tels que ceux de nature organosilicique et par exemple les siliconates de métaux alcalins ou alcalino-terreux, les huiles silicones, les résines silicones et leurs mélanges,
- un ou plusieurs agents de coloration, anti-flamme, de lubrification, anti-oxydants.

La teneur en eau de la composition objet de l'invention, n'est pas un paramètre prépondérant en vue de son application à la fourniture d'articles thermoformés. En particulier, il n'y a aucune nécessité d'ajuster cette teneur en eau, notamment à des taux peu élevés et/ou de dégazer comme décrit dans certaines publications précitées de l'art antérieur.

On s'assurera simplement que ladite composition présente une humidité telle que son alimentation au niveau des dispositifs ultérieurs de transformation peut être assurée convenablement.

En pratique cette humidité est au plus égale à 40 % environ et se situe notamment entre environ 5 et environ 30 %.

Il convient de souligner que dans le cadre de l'invention, la mise en oeuvre et la mise en présence entre eux du composé amylacé, du polyester biodégradable, du sel d'acide hydrocarboxylique et des adjuvants éventuels peuvent effectuer selon une multitude de variantes, notamment en ce qui concerne la forme d'introduction (forme liquide, visqueuse ou solide, introduction par mélange intime ou par pulvérisation, etc) et le moment d'introduction (introduction dès le départ ou fractionnée dans le temps) de chacun de ces constituants au sein de la composition.

En suite de quoi, on dispose désormais d'un nouveau procédé de préparation d'une composition thermoformable biodécomposable ou biodésintégrable caractérisé par le fait que l'on soumet un composé amylacé, en présence ou non d'un polyester biodégradable et/ou d'un sel d'acide hydroxycarboxylique et/ou d'un ou de plusieurs adjuvants de toutes natures, à un traitement apte à l'amener dans un état destructuré ou partiellement fondu, de préférence partiellement fondu, et que, éventuellement l'on met ultérieurement le composé amylacé ainsi obtenu en présence, s'ils n'ont pas déjà été introduits, d'au moins un polyester biodégradable, d'un sel d'acide hydroxycarboxylique et/ou d'un ou de plusieurs adjuvants de toutes natures.

Le traitement auquel on soumet le composé amylacé, de préférence pour amener ce dernier dans un état partiellement fondu, peut être effectué sur tout type de dispositifs conventionnels, en particulier ceux classiquement utilisés pour l'application, à des produits de toute nature, de micro-ondes ou d'ultrasons et/ou utilisés pour la transformation, en continu ou discontinu, des matières plastiques et élastomères et notamment des dispositifs du type extrudeurs monovis ou bivis, malaxeurs ou presses à injecter.

Selon le procédé conforme à l'invention, le traitement auquel on soumet le composé amylacé peut par exemple être, soit un traitement thermique, combinant ou non l'action d'ultra-sons et/ou de la pression à celle de la température, en particulier un traitement de cuisson-extrusion ou de gélatinisation sur tambour, soit un traitement aux micro-ondes.

A titre d'exemple, on peut citer des dispositifs de construction modulaire tels que les co-malaxeurs type MDK/E 46 ou MDK/E 709 commercialisés par la société BUSS.

De préférence, le traitement thermique, en particulier de cuisson-extrusion, auquel on peut soumettre le composé amylacé est effectué à une température au plus égale à 130°C environ, se situant notamment entre 50 et 120°C environ.

Selon une première variante du procédé de préparation de composition thermoformable, conforme à l'invention, le traitement auquel on soumet le composé amylacé en vue de l'amener dans un état destructuré ou partiellement fondu, de préférence partiellement fondu, est effectué en présence respectivement soit d'au moins un polyester biodégradable, soit au moins d'un sel d'acide hydroxycarboxylique, le composé amylacé obtenu étant ultérieurement mis en présence, par tout moyen approprié, respectivement soit d'au moins un sel d'acide hydrocarboxylique soit d'au moins un polyester biodégradable.

Selon une autre variante dudit procédé, le traitement auquel on soumet le composé amylacé en vue de l'amener dans un état destructuré ou partiellement fondu, de préférence partiellement fondu, se fait en présence d'au moins un polyester biodégradable et d'au moins un sel d'acide hydrocarboxylique.

En suite de quoi les compositions amylacées thermoformables biodécomposables ou biodésintégrables obtenues conformément à l'invention, qui constituent des produits industriels nouveaux, peuvent être appliquées à la préparation d'articles de toutes formes (joncs, tubes, films, granulés, capsules, ou formes plus élaborées), et de toutes destinations et ce, par mise en oeuvre de toute technique disponible de thermoformage et notamment par extrusion, co-extrusion, moulage par injection, moulage par soufflage ou par calandrage.

La très grande versatilité desdites compositions thermoformables se manifeste, entre autres, par la possibilité d'obtenir, y compris pour un dispositif de thermoformage et des paramètres opératoires donnés, des articles formés présentant, outre une grande biodégradabilité et une bonne résistance à l'eau, une très large gamme de propriétés mécaniques, notamment en termes de viscoélasticité.

L'invention pourra être mieux comprise à l'aide des exemples qui suivent et qui font état de certains modes de réalisation particulièrement avantageux des compositions thermoformables selon l'invention.

**EXEMPLES**

EXEMPLE 1 : PREPARATION, APPLICATION ET CARACTERISATION DE COMPOSITIONS SELON L'INVENTION CONTENANT UN POLYLACTATE DE HAUT POIDS MOLECULAIRE (PM ≈ 150 000)

1. EXEMPLE DE MODE DE REALISATION DE COMPOSITIONS SELON L'INVENTION

La mise en présence conformément à l'invention d'au moins un composé amylacé, un polyester comme par exemple un polymère de l'acide lactique ou un copolymère issu de l'acide lactique et au moins un sel d'acide hydroxycarboxylique ainsi que d'éventuels adjuvants se fait, à température ambiante, dans un homogénéiseur de type PAPPENMEIER refroidi par circulation d'eau.

On notera que dans cette mise en oeuvre plus particulière de polymère ou de copolymères de l'acide lactique, il est éventuellement possible de faire appel à des prépolymérisants susceptibles de remplir à la fois la fonction du polymère et/ou du copolymère ainsi que de celle du sel d'acide hydroxycarboxylique.

Dans le cas de la mise en oeuvre d'un sel d'acide hydroxycarboxylique se présentant sous forme liquide (lactate de sodium par exemple), ledit sel est ajouté progressivement au mélange, qui est homogénéisé pendant une durée de l'ordre de quelques minutes.

2. APPLICATION DES COMPOSITIONS A LA PREPARATION D'ARTICLES THERMOFORMES

Une composition obtenue comme décrit précédemment et à base de polylactate de sodium de haut poids moléculaire (≈ 150 000) est, à température ambiante par exemple, introduite dans la trémie d'alimentation d'une machine de transformation de type co-malaxeur BUSS PR 46.

Cet appareillage permettant l'obtention d'une composition thermoformable puis sa mise en forme, est constitué d'un malaxeur suivi d'une extrudeuse de reprise en tête d'équerre et d'une filière équipée d'un couteau, lequel permet la préparation de granulés à partir de l'article thermoformé obtenu, celui-ci se présentant sous la forme d'un jonc. Les modalités générales de traitement sont les suivantes :

- la température de consigne est de 120°C et, en raison du refroidissement par eau de la zone d'alimentation, un gradient s'installe, allant de 100 (zone à proximité de la zone d'alimentation) à 115°C environ (zone de la filière).
- la vitesse de rotation de la vis est ajustée de manière à obtenir le meilleur mélange possible; elle est située entre 20 et 60 tr/mm environ.
- la pression est maintenue à une valeur inférieure à 5 bars environ.

Les articles thermoformés obtenus dans le cas présent (joncs, granulés) peuvent être utilisés en l'état. Cependant, d'une manière générale, on les destinera plus volontiers à l'alimentation d'autres dispositifs de transformation, continus ou discontinus, tels que presses à injecter, extrudeurs mono ou double vis, calandres, en vue de la fabrication d'objets finis tels que tubes, profilés, films, plaques, pièces injectées.

Par la demande de brevet FR-A-2 672 295, nous savons qu'il est tout à fait possible d'obtenir un large éventail de matières thermoplastiques conçues à partir d'au moins un composé amylacé et au moins un sel d'acide hydroxycarboxylique, et que celles-ci présentent des caractéristiques mécaniques aussi intéressantes que diversifiées. La présence des polyesters revendiqués ne modifiera que très modérément les conditions de fonctionnement, notamment la température, laquelle sera légèrement plus élevée. Très généralement, on conservera toute l'étendue des possibilités offertes liées à l'origine de l'amidon, son mode et son degré de transformation, au système plastifiant utilisé ainsi qu'aux conditions de transformation.

L'intérêt essentiel supplémentaire de la réalisation des mélanges envisagés réside dans l'amélioration de la résistance à l'eau et l'ajustement de la capacité de biodégradation ou de biodécomposition, ces propriétés étant ainsi plus compatibles avec les exigences de l'industrie.

En effet, un reproche essentiel que l'on peut formuler vis-à-vis des compositions à base d'utilisation exclusivement d'amidon pour polymères est leur sensibilité à l'eau, leur difficulté à diminuer celle-ci et leur biodégradabilité trop rapide, tant cette matière est vulnérable en milieu humide ou aqueux.

L'introduction des polyesters revendiqués permettra d'améliorer sensiblement ce comportement vis-à-vis de l'eau tout en permettant toujours la biodégradabilité, celle-ci paraissant en outre plus adéquate dans la mesure où interviendront parallèlement, pour la fragilisation de l'objet mis en décharge, l'action de microorganismes sur la partie amylacée et l'hydrolyse du polyester.

## 3. CARACTERISATION DES COMPOSITIONS

a) Caractérisation par analyse mécanique dynamique des propriétés mécaniques des articles obtenus.

L'Analyse Mécanique Dynamique est une méthode particulièrement sensible à tout changement dans la structure et les interactions macromoléculaires qui induit une modification des propriétés macroscopiques du matériau. Il s'agit d'une technique très fine pour déterminer la variation des modules élastiques et de perte d'un échantillon en fonction de la température. La même technique donne également accès à la température de transition vitreuse (Tg) du matériau. La connaissance de cette donnée ainsi que les propriétés d'amortissement mesurées à l'état solide peuvent être employées pour prévoir la température d'utilisation, les propriétés au choc ainsi que la rigidité du produit fini.

Le principe de l'Analyse Mécanique Dynamique repose sur l'application à un échantillon d'une déformation linéaire (ou de torsion) sinusoïdale de fréquence donnée et de faible amplitude superposée à une contrainte constante de valeur connue. La réponse du matériau est une contrainte de même pulsation mais déphasée d'un angle. Le comportement du matériau est décrit par une grandeur complexe appelée module d'élasticité complexe tel que:

$$E = E' + E''$$

où

$E'$ est le module élastique et $E''$ le module visqueux. L'angle de déphasage est tel que $tg\delta$, également appelé facteur de perte, est égal à $E''/E'$

Un matériau purement élastique tel que l'acier fera apparaître un angle de déphasage nul, soit une composante imaginaire nulle. Un matériau purement visqueux tel que l'eau fera apparaître une composante réelle nulle. L'angle de déphasage sera alors de 90°. Pour les polymères synthétiques, un matériau viscoélastique pourra couvrir toutes les valeurs comprises entre 0 et 90°.

Une amélioration particulière a été apportée à la technique par la fabrication d'une cellule de mesure de géométrie spéciale permettant d'isoler le matériau testé de l'air en utilisant une huile silicone de très faible viscosité ; on limite ainsi les problèmes liés à l'eau présente dans l'échantillon.

Dans le cas présent, les essais ont été menés sur un appareil de type R.S.A. II (Rheometrics Solid Analyser). La géométrie de mesure est la tension/compression cylindrique et on effectue des balayages en température à fréquence de sollicitation constante. La fréquence choisie est dans notre cas w = 10 rad/s et le domaine de température couvert va de la température ambiante à 150°C environ. On procède à une mesure tous les 2°C, tout en laissant à l'échantillon un temps de 2,5 min. afin d'assurer son équilibre thermique avec le four.

Les matériaux testés sont issus des joncs thermoformés obtenus comme décrit précédemment, lesquels sont perforés et coupés en échantillons dont les dimensions sont les suivantes:

- diamètre maximum : 15 mm
- diamètre préféré : 8 à 14 mm
- épaisseur maximum : 25 mm
- épaisseur préférée : 3 à 5 mm

La détermination du facteur de perte $tg\delta$ faite sur des articles obtenus à partir de deux compositions selon l'invention, donne les résultats suivants:

|  | Température (°C) au | maximum de tgδ |
|---|---|---|
| Composé amylacé 75 % }<br><br>} 70 %<br>Polylactate de sodium 25 % } | Amidon de maïs cireux (Waxilys ®) | Amidon de maïs riche en amylose (Eurylon 7 ®) |
| Sorbitol.................................. 10 %<br>Glycérine................................ 10 %<br> Lactate de sodium ................ 10 %<br>(80 % MS) | environ 58°C | environ 55°C |

(les pourcentages sont exprimés en poids)

b. SENSIBILITE A L'EAU

On mesure le temps nécessaire pour atteindre la destruction physique complète dans 100 ml d'eau distillée à 20°C d'un échantillon sous la forme d'un cylindre de 6 mm de diamètre, de 5 g de matière thermoplastique composée : pour 30 parties de plastifiant constitué de :

10 parties de sorbitol poudre,
10 parties de glycérine,
10 parties de lactate de sodium à 80 % MS, et

pour 70 parties de :

- amidon de maïs cireux     4 heures

- 75 % d'amidon de maïs cireux     24 heures
  + 25 % polylactate de sodium

- 50 % amidon de maïs cireux     15 jours
  + 50 % polylactate de sodium

- 25 % amidon de maïs cireux     3 mois
  + 75 % polylactate de sodium

- amidon riche en amylose (70%)     4 heures

- 75 % amidon riche en amylose     96 heures
  + 25 % polylactate de sodium

- 50 % amidon riche en amylose     2 mois
  + 50 % polylactate de sodium

- 25 % amidon riche en amylose     10 mois
  + 75 % polylactate de sodium

- Polylactate de sodium seul          12 mois
  (PM ≈ 150 000)


c. BIODEGRADABILITE

On a mesuré la biodégradabilité par la méthode de la demande biologique en oxygène à cinq jours (DB05) d'échantillons composés :
pour 30 parties de plastifiant constitué de :

10 parties de sorbitol poudre,
10 parties de glycérine,
10 parties de lactate de sodium à 80 % MS, et

pour 70 parties de:

- amidon de maïs cireux          456 mg/g
- amidon riche en amylose          205 mg/g
- polylactate de sodium          110 mg/g


EXEMPLE 2 - APPLICATION ET CARACTERISATION DE COMPOSITIONS SELON L'INVENTION CONTENANT UN OLIGOLACTATE DE BAS POIDS MOLECULAIRE (PM ≈ 2 500)

a. APPLICATION DES COMPOSITIONS A LA PREPARATION D'ARTICLES THERMOFORMES

Dans le cadre de cet exemple, on étudie le comportement à l'extrusion de compositions selon l'invention contenant un oligolactate de bas poids moléculaire (PM = 2 500), ci-après désigné "PLA 2 500".

Le traitement d'extrusion est mené sur extrudeuse bis-vis conique RHEOMEX TW 100 associée à une unité motrice RHEOCORD 90.

Le fourreau est conique et présente une longueur de 300 mm.

L'extrudeuse est équipée de trois zones de chauffage le long du fourreau (zones 1, 2 et 3) et d'une zone de chauffage en tête (zone 4) ainsi que de capteurs mixtes pression et température en zones 2, 3 et 4. Les deux vis (jeu de vis standard référencé 557-2211) sont de type interpénétrantes et contre-rotatives.

La filière utilisée a un diamètre de 6 mm.

Selon la composition, la température de consigne se situe entre 90 et 110°C.

Au cours des essais d'extrusion sont enregistrés, l'évolution de la température T du matériau, exprimée en °C, ainsi que le couple C, exprimé en N.m., qu'oppose le matériau extrudé à la rotation des vis.

Le tableau 1 ci-après reprend les valeurs de couple et de température de matériau enregistrées pour différentes compositions selon l'invention ainsi que des observations générales sur les articles thermoformés obtenus (joncs).

Deux compositions témoin sont testées dans le cadre de cet exemple, à savoir respectivement :

- la composition T à base, notamment, d'un composé amylacé (en l'occurence d'un amidon riche en amylose commercialisé par la Société Demanderesse sous l'appellation "EURYLON®VII"), d'un sel d'acide hydroxycarboxylique (en l'occurence du lactate de sodium à 60% de matière sèche) mais exempte de polyester biodégradable,
- la composition 6 à base, notamment, de composé amylacé (EURYLON®VII) et de polyester biodégradable (en l'occurence du polyester sus-mentionné dénommé "PLA 2 500"), mais exempte d'agent plastifiant du type sel d'acide hydroxycarboxylique.

| COMPOSITION | T | 1 | 2 | 3 | 4 | 5 | 6 | 7 | 8 | 9 |
|---|---|---|---|---|---|---|---|---|---|---|
| amidon riche en amylose EURYLON VII | 70 | 70 | 70 | 70 | 70 | 70 | 70 | - | - | 70 |
| amidon riche en amylopectine (waxy) | - | - | - | - | - | - | - | 70 | 70 | - |
| sorbitol | 20 | 20 | 20 | 20 | 20 | 20 | 20 | 20 | 20 | 20 |
| lactate de sodium | 10 | 10 | 10 | 20 | 10 | 10 | 0 | 10 | 10 | 5 |
| PLA 2500 | - | 40 | 10 | 10 | 5 | 2 | 6 | 2 | 5 | 2 |
| eau | - | - | - | - | - | - | 4 | - | - | 2 |
| Couple (N.m) | 65 | | 15-25 | 8-10 | 23-25 | 32-35 | | 20-15 | 15 | 45-50 |
| Temperature du matériau T (°C) | 109 | | 100-118 | 106-115 | 109-115 | 107-108 | | 102-103 | 103 | 105-107 |
| Observations générales | jonc fondu homogene et lisse | Pas de transformation apparente. Produit obtenu pulverulent | jonc fondu, homogene et lisse | jonc fondu, homogene et lisse | jonc fondu, homogene et lisse | jonc fondu, homogene et lisse | blocage de l'extrudeuse | jonc fondu, homogene et lisse | jonc fondu, homogene et lisse | jonc fondu, homogene et lisse |

EP 0 579 546 B1

Des observations microscopiques faites sur les articles thermoformés obtenus à partir des compositions telles que les compositions 2 à 5 et 7 à 9 montrent que le composé amylacé contenu dans lesdits articles se présente dans un état partiellement fondu caractérisé par la persistance de granules d'amidon n'ayant pas subi de fusion destructurante.

Ces compositions sont parfaitement extrudables et permettent l'obtention de joncs fondus, homogènes et lisses ce qui n'est pas le cas de la composition 6 laquelle est exempte de sel d'acide hydroxycarboxylique et se révèle non transformable.

Il est, en outre, remarquable de noter que les compositions selon l'invention permettent d'utiliser avantageusement des composés amylacés aussi différents, du point de vue de leurs nature, composition et propriétés, que des amidons riches en amylose et des amidons riches en amylopectine.

Dans le cas présent, à savoir des compositions selon l'invention dont le polyester biodégradable est de type oligolactate de faible poids moléculaire, on observe également qu'une proportion relativement élevée dudit polyester par rapport au composé amylacé, par exemple dans un rapport pondéral composé amylacé / polyester de 70/40 comme envisagé dans la composition 1, provoque un effet défavorable sur l'applicabilité du mélange résultant, lequel est biodégradable, au traitement particulier d'extrusion tel qu'envisagé dans le présent exemple.

En suite de quoi, comme il a déjà été précisé, dans le cas particulier où la composition selon l'invention est à base d'un ou plusieurs polymère(s) ou oligomère(s) d'acide lactique (ou leurs sels) ayant un poids moléculaire inférieur à environ 50 000, se situant notamment entre environ 500 et environ 5 000 et en particulier entre 800 et 3 000 comme c'est le cas du produit susmentionné "PLA 2 500", l'homme du métier fera généralement en sorte que ladite composition présente un rapport pondéral entre composé(s) amylacé(s) et polyester(s) biodégradable(s) se situant préférentiellement entre 99/1 et 70/30 et encore plus avantageusement entre 98/2 et 80/20 afin que ladite composition soit facilement extrudable à des températures relativement basses (<120°C).

b. CARACTERISATION DU TAUX DE BIODEGRADABILITE DES COMPOSITIONS

On a mesuré selon les normes NF 90-103 et NF 90-101 respectivement la demande biologique en oxygène (DB05) et la demande chimique en oxygène (DCO) de chacun des échantillons repris au niveau du tableau 2 ci-après, en vue de calculer le taux de biodégradabilité B de chacun desdits échantillons, celui-ci étant exprimé en % et obtenu selon la formule B = (DB 05 / DCO) x 100.

Les échantillons testés proviennent des compositions T, 3, 5, 7 et 9 décrites au niveau du tableau 1 ci-avant. Cependant, dans le cas présent, le taux de biodégradabilité B de chacune de ces compositions a été généralement évalué respectivement avant le traitement d'extrusion tel que décrit précédemment, c'est-à-dire alors que lesdites compositions ne constituent que de simples mélanges non traités thermiquement, et après ledit traitement d'extrusion, à savoir sur les articles thermoformés obtenus (joncs).

Les résultats obtenus sont consignés dans le tableau 2 ci-dessous.

| COMPOSITION | DB 05 g/g | DCO g/g | Taux de biodégradabilité B en % |
|---|---|---|---|
| Composition T avant extrusion | 0,325 | 0,875 | 37,1 |
| Composition 2 avant extrusion | 0,360 | 1,04 | 34,6 |
| Composition 3 avant extrusion | 0,330 | 0,925 | 35,6 |
| Composition 5 avant extrusion | 0,305 | 1,03 | 29,6 |
| Composition 7 avant extrusion | 0,559 | 1,14 | 49,0 |
| Composition 9 avant extrusion | 0,390 | 1,16 | 33,6 |
| Composition T après extrusion | 0,470 | 1,00 | 47,0 |
| Composition 3 après extrusion | 0,305 | 1,15 | 26,5 |
| Composition 5 après extrusion | 0,385 | 1,03 | 37,4 |
| Composition 7 après extrusion | 0,445 | 1,02 | 43,6 |
| Composition 9 après extrusion | 0,340 | 0,96 | 35,4 |

En ce qui concerne les résultats obtenus spécifiquement sur les compositions évaluées avant extrusion, on observe, de manière générale, que la présence du polyester biodégradable, en l'occurence l'oligolactate "PLA 2 500", permet de diminuer, et donc de contrôler, le taux de biodégradabilité de compositions à base d'un composé amylacé déterminé (amidon riche en amylose par exemple), dans lesquelles il est introduit. Cette diminution ne semble cependant pas obligatoirement proportionnelle au taux d'incorporation dudit oligolactate. En outre, la comparaison des résultats obtenus, dans le cas présent :

- avec les compositions 5 et 7 avant extrusion, montre qu'un composé amylacé de type amidon riche en amylopectine (amidon waxy - cf composition 7) confère significativement plus de biodégradabilité à une composition dans laquelle il est introduit qu'un composé amylacé riche en amylose ("EURYLON®VII" - cf composition 5).
- avec respectivement les compositions 5 et 9 avant extrusion ou les compositions 2 et 3 avant extrusion, semble montrer que le taux d'introduction du sel d'acide hydroxycarboxylique, en l'occurence le lactate de sodium, n'a pas d'influence majeure sur le taux de biodégradabilité desdites compositions.

Les résultats obtenus spécifiquement sur les compositions selon l'invention obtenues après extrusion, permettent de tirer les mêmes conclusions générales que précédemment. Il est toutefois remarquable de noter que, de façon surprenante :

- la composition 5 et, à un degré moindre, la composition 9 sont, comme la composition témoin T, moins biodégradables avant extrusion qu'après extrusion, et
- inversement, les compositions 3 et 7 sont moins biodégradables après extrusion qu'avant extrusion.

Coupe de 10 µm d'épaisseur réalisée dans un article thermoformé obtenu à partir de la composition 7 de l'exemple 2 (voir figure 1 en annexe)

Observation préliminaire au microscope NIKKON type LABOPHOT sous lumière polarisée.

La figure 1 consiste en une photographie (appareil photographique : boîtier NIKKON F-301, pellicule de sensibilité de 100 ASA) prise au microscope sous lumière polarisée. Le grossissement résultant de cette photographie est de X 222.

La figure 1 montre clairement la persistance significative de granules de composé amylacé, en l'occurence de granules d'amidon riche en amylopectine (waxy), et donc l'état non destructuré mais partiellement fondu dudit composé amylacé.

Le diamètre de ces granules se situe généralement entre 10 et 40 µm, notamment entre 30 et 40 µm.

Ces nombreux granules persistants présentent, en outre, une croix de polarisation confirmant l'état général du composé amylacé comme étant uniquement partiellement fondu.

Coupe de 10 µm d'épaisseur réalisée dans un article thermoformé obtenu à partir de la composition 5 de l'exemple 2 (voir figure 2 en annexe)

Les mêmes conditions d'observation, de prise de vue et d'obtention de photographie que celles mises en oeuvre pour la figure 1 ont été utilisées.

Les mêmes conclusions générales que celles résultant de l'observation de la figure 1 peuvent être tirées, notamment en ce qui concerne l'état non destructuré mais uniquement partiellement fondu du composé amylacé, en l'occurence de l'amidon riche en amylose, contenu dans l'article thermoformé étudié.

Dans le cas présent, les granules persistants d'amidon riche en amylose ont, de manière logique, un diamètre moyen inférieur aux granules d'amidon riche en amylopectine observés au niveau de la figure 1.

Les granules observés au niveau de la présente figure 2 ont un diamètre se situant généralement entre 10 et 30 µm, notamment entre 10 et 20 µm.

Coupe de 10 µm d'épaisseur réalisée dans un article thermoformé à base de composition NOVON® (voir figure 3 en annexe)

Les mêmes conditions d'observation, de prise de vue et d'obtention de photographie que celles mises en oeuvre pour la figure 1 ont été utilisées.

Il résulte de l'observation de la figure 3 que l'on ne peut déceler aucune persistance réelle de granules d'amidon au sein de l'article thermoformé étudié, lesdits granules ayant subi une fusion totale ou destructuration.

En outre, aucun élément ne permet, sur cette photographie, de mettre en évidence une quelconque croix de polarisation résiduelle confirmant l'état général du composé amylacé comme étant totalement fondu.

**Revendications**

1. Composition thermoformable caractérisée par le fait qu'elle contient au moins un composé amylacé, au moins un polyester biodégradable et au moins un sel d'acide hydroxycarboxylique.

**2.** Composition selon la revendication 1 caractérisée par le fait que le composé amylacé se présente dans un état fondu partiel.

**3.** Composition selon l'une des revendications 1 et 2 caractérisée par le fait qu'elle est apte à fournir un article thermoformé présentant un module de perte tgδ dont la valeur maximum se situe à une température au plus égale à 150°C, notamment entre 0 et 130°C environ.

**4.** Composition selon l'une des revendications 1 à 3, caractérisée en ce que le composé amylacé est choisi dans le groupe comprenant les amidons natifs, naturels ou hybrides, provenant du maïs, du maïs à haute teneur en amylose, du maïs cireux, du blé, du riz, du pois, de la pomme de terre, du manioc, les coupes ou fractions qui peuvent être faites ou obtenues à partir desdits amidons et les mélanges quelconques d'au moins deux quelconques de ces produits.

**5.** Composition selon l'une des revendications 1 à 3, caractérisée en ce que le composé amylacé est choisi dans le groupe comprenant les amidons, naturels ou hybrides, modifiés par la voie chimique, en particulier par éthérification, ionique ou non ionique, estérification, réticulation, oxydation, traitement alcalin, hydrolyse acide et/ou enzymatique.

**6.** Composition selon l'une des revendications 1 à 5, caractérisée en ce que ledit polyester biodégradable est choisi parmi l'acide polylactique, l'acide polyglycolique, l'acide polyhydroxybutyrique, l'acide polyhydroxyproprionique, l'acide polyhydroxyvalérianique, les copolymères de deux au moins des polyesters précités, ainsi que les dérivés et sels des polymères et copolymères précités.

**7.** Composition selon la revendication 6, caractérisée en ce que ledit polyester biodégradable est l'acide polylactique ou un polylactate, tel qu'un polylactate de sodium.

**8.** Composition selon la revendication 7, caractérisée en ce que le polyester biodégradable est choisi parmi les polymères et oligomères à base d'acide D et/ou L lactique présentant un poids moléculaire inférieur à 1 000 000, notamment inférieur à 150 000, et les sels, tels que les sels de sodium, desdits polymères et oligomères.

**9.** Composition selon la revendication 8, caractérisée en ce que le polyester biodégradable est choisi parmi les oligomères d'acide D et/ou L lactique présentant un poids moléculaire d'environ 500 à environ 5 000.

**10.** Composition selon l'une des revendications 1 à 7, caractérisée en ce qu'elle présente un rapport pondéral entre composé(s) amylacé(s) d'une part et polyester(s) biodégradable(s) d'autre part compris entre environ 99/1 et 1/99, étant précisé qu'il est tenu compte des poids secs mis en oeuvre.

**11.** Composition selon la revendication 10, caractérisée en ce qu'elle présente un rapport pondéral compris entre 80/20 et 50/50.

**12.** Composition selon la revendication 10, caractérisée en ce qu'elle est à base de polyester(s), en particulier de polymère(s) d'acide lactique ou de leurs sels, présentant un poids moléculaire supérieur ou égal à 150 000 environ.

**13.** Composition selon l'une des revendications 1 à 9, caractérisée en ce qu'elle est à base de polyester(s), en particulier de polymère(s) ou d'oligomère(s) d'acide lactique ou l'un de leurs sels, présentant un poids moléculaire inférieur à 150 000 environ et en ce que ladite composition présente un rapport pondéral entre composé(s) amylacé(s) d'une part et polyester(s) biodégradable(s) d'autre part entre environ 99/1 et 1/99.

**14.** Composition selon la revendication 13, caractérisée en ce qu'elle présente un rapport pondéral compris de préférence entre 99/1 et 70/30.

**15.** Composition selon la revendication 13, caractérisée en ce qu'elle est à base de polymère(s) ou oligomère(s) d'acide lactique ou de leurs sels, présentant un poids moléculaire inférieur à environ 50 000, et en ce que ladite composition présente un rapport pondéral entre composé(s) amylacé(s) d'une part et polyester(s) biodégradable(s) d'autre part compris préférentiellement entre 98/2 et 80/20.

**16.** Composition selon la revendication 15, caractérisée en ce que le polymère ou oligomère présente un poids moléculaire se situant entre environ 500 et environ 5 000.

**17.** Composition selon l'une des revendications 1 à 16, caractérisée en ce que le sel d'acide hydroxycarboxylique est choisi dans le groupe comprenant les sels d'acides monohydroxy/monocarboxyliques et les sels d'acides polyhydroxy/monocarboxyliques et les mélanges quelconques d'au moins deux quelconques desdits sels.

**18.** Composition selon la revendication 17, caractérisée en ce que le sel d'acide hydroxycarboxylique est un sel de métal alcalin ou alcalino-terreux de l'acide lactique, de l'acide gluconique, de l'acide maltobionique, de l'acide lactobionique ou de l'acide glycérique.

**19.** Composition selon la revendication 18, caractérisée en ce que le sel d'acide hydroxycarboxylique est un sel de métal alcalin ou alcalino-terreux de l'acide lactique.

**20.** Composition selon la revendication 19, caractérisée en ce que le sel d'acide hydroxycarboxylique est du lactate de sodium.

**21.** Composition selon l'une des revendications 1 à 20, caractérisée en ce qu'elle présente un rapport pondéral entre la somme composé(s) amylacé(s) + polyester(s) biodégradable(s) d'une part, et sel(s) d'acide hydroxycarboxylique d'autre part, compris entre environ 99/1 et 25/75, étant précisé qu'il est tenu compte des poids secs mis en oeuvre.

**22.** Composition selon la revendication 21, caractérisée en ce qu'elle présente un rapport pondéral compris entre 98/2 et 40/60.

**23.** Composition selon l'une des revendications 1 à 22, caractérisée en ce qu'elle contient, en outre, au moins un adjuvant, ledit adjuvant étant choisi, dans le groupe comprenant les agents d'extension ou de charge, les plastifiants, les agents hydrofugeants, les agents lubrifiants, les agents colorants, les agents anti-flamme, les agents anti-oxydants et les fongicides.

**24.** Composition selon la revendication 23, caractérisée en ce qu'elle contient au moins un adjuvant choisi dans le groupe comprenant l'urée et ses dérivés, les sucres hydrogénés, les glycols, les polyéthylène et polypropylène glycols, le glycérol et ses dérivés.

**25.** Composition selon la revendication 24, caractérisée en ce que le sucre hydrogéné est choisi parmi le sorbitol, le mannitol, le maltitol, le lactitol ainsi que les produits pouvant contenir au moins l'un desdits sucres hydrogénés, notamment les hydrolysats d'amidon hydrogénés.

**26.** Procédé de préparation d'une composition thermoformable selon la revendication 1, caractérisé en ce que l'on met en présence au moins un composé amylacé, un polyester biodégradable et un sel d'acide hydroxycarboxylique à température ambiante, ainsi que d'éventuels adjuvants.

**27.** Procédé de préparation d'une composition thermoformable selon les revendications 1 et 2, caractérisé par le fait que l'on soumet un composé amylacé, en présence ou non d'un polyester biodégradable et/ou d'un sel d'acide hydroxycarboxylique, et éventuellement un ou plusieurs adjuvants de toutes natures, à un traitement apte à l'amener dans un état destructuré ou partiellement fondu, et que, éventuellement, l'on met ultérieurement le composé amylacé ainsi obtenu en présence, s'ils n'ont pas déjà été introduits, d'au moins un polyester biodégradable, d'un sel d'acide hydroxycarboxylique, et éventuellement un ou plusieurs adjuvants de toutes natures.

**28.** Procédé selon l'une quelconque des revendications 26 et 27, caractérisé par le fait que que l'on soumet un composé amylacé à un traitement apte à l'amener dans un état partiellement fondu.

**29.** Procédé selon la revendication 28, caractérisé par le fait que le traitement auquel on soumet le composé amylacé est un traitement thermique, combinant ou non l'action d'ultra-sons et/ou de la pression à celle de la température.

**30.** Procédé selon la revendication 29, caractérisé par le fait que le traitement, est un traitement de cuisson-extrusion ou de gélatinisation sur tambour, ou bien un traitement aux micro-ondes.

**31.** Procédé selon la revendication 29, caractérisé par le fait que le traitement thermique, en particulier de cuisson-extrusion, auquel on soumet le composé amylacé est effectué à une température au plus égale à 130°C environ.

**32.** Procédé selon la revendication 31, caractérisé par le fait que le traitement thermique est effectué à une température se situant entre environ 50°C et environ 120°C.

33. Procédé selon l'une quelconque des revendications 27 à 32, caractérisé par le fait que le traitement auquel on soumet le composé amylacé est effectué en présence d'au moins un polyester biodégradable, le composé amylacé obtenu étant ultérieurement mis en présence, par tout moyen approprié, d'au moins un sel d'acide hydroxycarboxylique.

34. Procédé selon l'une quelconque des revendications 27 à 32, caractérisé par le fait que le traitement auquel on soumet le composé amylacé est effectué en présence d'au moins un sel d'acide hydroxycarboxylique, le composé amylacé obtenu étant ultérieurement mis en présence, par tout moyen approprié, d'au moins un polyester biodégradable.

35. Procédé selon l'une quelconque des revendications 27 à 32, caractérisé par le fait que le traitement auquel on soumet le composé amylacé se fait en présence d'au moins un polyester biodégradable et d'au moins un sel d'acide hydroxycarboxylique.

36. Utilisation d'une composition thermoformable selon l'une des revendications 19 à 25 ou préparée selon l'une des revendications 26 à 35 pour l'obtention d'articles thermoformés.

**Patentansprüche**

1. Thermoformbare Zusammensetzung, dadurch gekennzeichnet, daß sie mindestens eine Stärke-Verbindung, mindestens einen biologisch abbaubaren Polyester und mindestens ein Hydroxycarbonsäuresalz enthält.

2. Zusammensetzung nach Anspruch 1, dadurch gekennzeichnet, daß die Stärke-Verbindung in einem teilweise geschmolzenen Zustand vorliegt.

3. Zusammensetzung nach einem der Ansprüche 1 und 2, dadurch gekennzeichnet, daß sie einen thermogeformten Gegenstand (Formkörper) liefern kann, der einen Verlustmodul tg δ aufweist, dessen Maximalwert bei einer Temperatur von höchstens 150°C, insbesondere zwischen 0 und etwa 130°C, liegt.

4. Zusammensetzung nach einem der Ansprüche 1 bis 3, dadurch gekennzeichnet, daß die Stärke-Verbindung ausgewählt wird aus der Gruppe, die umfaßt die nativen, natürlichen oder Hybrid-Stärken, die aus Mais, Mais mit hohem Amylosegehalt, wachsartigem Mais, Weizen (Getreide), Reis, Erbsen, Kartoffeln und Maniok stammen, die Schnitte oder Fraktionen, die aus den genannten Stärken hergestellt oder erhalten werden können, und beliebige Mischungen von mindestens zwei beliebigen dieser Produkte.

5. Zusammensetzung nach einem der Ansprüche 1 bis 3, dadurch gekennzeichnet, daß die Stärke-Verbindung ausgewählt wird aus der Gruppe, die umfaßt die natürlichen oder Hybrid-Stärken, die auf chemischem Wege, insbesondere durch Veretherung, ionisch oder nicht-ionisch, Veresterung, Vernetzung, Oxidation, alkalische Behandlung, Säurehydrolyse und/oder enzymatisch modifiziert worden sind.

6. Zusammensetzung nach einem der Ansprüche 1 bis 5, dadurch gekennzeichnet, daß der genannte biologisch abbaubare Polyester ausgewählt wird aus der Gruppe Polymilchsäure, Polyglycolsäure, Polyhydroxybuttersäure, Polyhydroxypropionsäure, Polyhydroxyvaleriansäure, den Copolymeren von mindestens zwei der genannten Polyester sowie den Derivaten und Salzen der genannten Polymeren und Copolymeren.

7. Zusammensetzung nach Anspruch 6, dadurch gekennzeichnet, daß der genannte biologisch abbaubare Polyester Polymilchsäure oder ein Polylactat wie ein Natriumpolylactat ist.

8. Zusammensetzung nach Anspruch 7, dadurch gekennzeichnet, daß der biologisch abbaubare Polyester ausgewählt wird aus der Gruppe der Polymeren und Oligomeren auf Basis der D- und/oder L-Milchsäure, die ein Molekulargewicht von weniger als 1 000 000, insbesondere weniger als 150 000, aufweisen, und den Salzen, z.B. den Natrium-Salzen, der genannten Polymeren und Oligomeren.

9. Zusammensetzung nach Anspruch 8, dadurch gekennzeichnet, daß der biologisch abbaubare Polyester ausgewählt wird aus D- und/oder L-Milchsäure-Oligomeren, die ein Molekulargewicht von etwa 500 bis etwa 5 000 haben.

10. Zusammensetzung nach einem der Ansprüche 1 bis 7, dadurch gekennzeichnet, daß sie ein Gewichtsverhältnis zwischen der(den) Stärke-Verbindung(en) einerseits und dem(den) biologisch abbaubare Polyester(n) andererseits zwischen etwa 99:1 und 1:99 aufweist, wobei dieser Wert auf das Trockengewicht der eingesetzten Substanzen bezogen ist.

11. Zusammensetzung nach Anspruch 10, dadurch gekennzeichnet, daß sie ein Gewichtsverhältnis zwischen 80:20 und 50:50 aufweist.

12. Zusammensetzung nach Anspruch 10, dadurch gekennzeichnet, daß sie eine solche auf Basis eines oder mehrerer Polyester, insbesondere eines oder mehrerer Milchsäure-Polymeren oder ihrer Salze ist, die ein Molekulargewicht von ≥ etwa 150 000 aufweisen.

13. Zusammensetzung nach einem der Ansprüche 1 bis 9, dadurch gekennzeichnet, daß sie eine solche auf Basis eines oder mehrerer Polyester, insbesondere eines oder mehrerer Milchsäure-Polymeren oder -Oligomeren oder eines ihrer Salze ist, die ein Molekulargewicht von weniger als etwa 150 000 aufweisen, und daß die genannte Zusammensetzung ein Gewichtsverhältnis zwischen der(den) Stärke-Verbindung(en) einerseits und dem(den) biologisch abbaubaren Polyester(n) andererseits zwischen etwa 99:1 und 1:99 aufweist.

14. Zusammensetzung nach Anspruch 13, dadurch gekennzeichnet, daß sie ein Gewichtsverhältnis aufweist, das vorzugsweise zwischen 99:1 und 70:30 liegt.

15. Zusammensetzung nach Anspruch 13, dadurch gekennzeichnet, daß es sich dabei um eine solche auf Basis eines oder mehrerer Milchsäure-Polymeren oder -Oligomeren oder ihrer Salze handelt, die ein Molekulargewicht von weniger als etwa 50 000 aufweisen, und daß die genannte Zusammensetzung ein Gewichtsverhältnis zwischen der (den)Stärke-Verbindung(en) einerseits und dem (den) biologisch abbaubaren Polyester(n) andererseits von vorzugsweise zwischen 98:2 und 80:20 aufweist.

16. Zusammensetzung nach Anspruch 15, dadurch gekennzeichnet, daß das Polymer oder Oligomer ein Molekulargewicht aufweist, das zwischen etwa 500 und etwa 5000 liegt.

17. Zusammensetzung nach einem der Ansprüche 1 bis 16, dadurch gekennzeichnet, daß das Hydroxycarbonsäuresalz ausgewählt wird aus der Gruppe, die umfaßt die Salze von Monohydroxy/monocarbonsäuren und die Salze von Polyhydroxy/monocarbonsäuren und beliebige Mischungen von mindestens zwei beliebigen der genannten Salze.

18. Zusammensetzung nach Anspruch 17, dadurch gekennzeichnet, daß das Hydroxycarbonsäuresalz ein Alkalimetall- oder Erdalkalimetallsalz von Milchsäure, Gluconsäure, Maltobionsäure, Lactobionsäure oder Glycerinsäure ist.

19. Zusammensetzung nach Anspruch 18, dadurch gekennzeichnet, daß das Hydroxycarbonsäuresalz ein Alkalimetall- oder Erdalkalimetallsalz von Milchsäure ist.

20. Zusammensetzung nach Anspruch 19, dadurch gekennzeichnet, daß das Hydroxycarbonsäuresalz Natriumlactat ist.

21. Zusammensetzung nach einem der Ansprüche 1 bis 20, dadurch gekennzeichnet, daß sie ein Gewichtsverhältnis zwischen der Summe der Stärke-Verbindung(en) und der biologisch abbaubaren Polyester einerseits und dem (den) Hydroxycarbonsäuresalz(en) andererseits zwischen etwa 99:1 und 25:75 aufweist, das bezogen ist auf das Trockengewicht der eingesetzten Komponenten.

22. Zusammensetzung nach Anspruch 21, dadurch gekennzeichnet, daß sie ein Gewichtsverhältnis zwischen 98:2 und 40:60 aufweist.

23. Zusammensetzung nach einem der Ansprüche 1 bis 22, dadurch gekennzeichnet, daß sie außerdem mindestens ein Adjuvans enthält, das ausgewählt wird aus der Gruppe, die umfaßt Streckmittel oder Füllmittel, Weichmacher, wasserabweisend-machende Mittel, Gleitmittel, Färbemittel, flammwidrig-machende Mittel, Antioxidationsmittel und Fungizide.

24. Zusammensetzung nach Anspruch 23, dadurch gekennzeichnet, daß sie mindestens ein Adjuvans enthält, das ausgewählt wird aus der Gruppe, die umfaßt Harnstoff und seine Derivate, hydrierte Zucker, Glycole, Polyethylen- und Polypropylenglycole, Glycerin und seine Derivate.

25. Zusammensetzung nach Anspruch 24, dadurch gekennzeichnet, daß der hydrierte Zucker ausgewählt wird aus der Gruppe Sorbit, Mannit, Maltit, Lactit und den Produkten, die mindestens einen der genannten hydrierten Zucker, insbesondere die hydrierten Stärkehydrolysate, enthalten können.

26. Verfahren zur Herstellung einer thermoformbaren Zusammensetzung nach Anspruch 1, dadurch gekennzeichnet, daß man mindestens eine Stärke-Verbindung, einen biologisch abbaubaren Polyester und ein Hydroxycarbonsäuresalz sowie gegebenenfalls Adjuvantien bei Umgebungstemperatur miteinander in Kontakt bringt.

27. Verfahren zur Herstellung einer thermoformbaren Zusammensetzung nach den Ansprüchen 1 und 2, dadurch gekennzeichnet, daß man eine Stärke-Verbindung in Gegenwart oder Abwesenheit eines biologisch abbaubaren Esters und/oder eines Hydroxycarbonsäuresalzes und gegebenenfalls eines oder mehrerer Adjuvantien beliebiger Art einer Behandlung unterwirft, die geeignet ist, sie in einen destrukturierten (abgebauten) oder teilweise geschmolzenen Zustand zu überführen, und daß man gegebenenfalls die so erhaltene Stärke-Verbindung anschließend mit mindestens einem biologisch abbaubaren Polyester, einem Hydroxycarbonsäuresalz und gegebenenfalls einem oder mehreren Adjuvantien beliebiger Art in Kontakt bringt, wenn diese noch nicht eingeführt worden sind.

28. Verfahren nach einem der Ansprüche 26 und 27, dadurch gekennzeichnet, daß man eine Stärke-Verbindung einer Behandlung unterwirft, die geeignet ist, sie in einen teilweise geschmolzenen Zustand zu überführen.

29. Verfahren nach Anspruch 28, dadurch gekennzeichnet, daß die Behandlung, der man die Stärke-Verbindung unterwirft, eine thermische Behandlung ist, die kombiniert oder nicht-kombiniert wird mit der Einwirkung von Ultraschall und/oder Druck bei dieser Temperatur.

30. Verfahren nach Anspruch 29, dadurch gekennzeichnet, daß die Behandlung eine Kochextrusions-oder Gelatinierungs-Behandlung in einer Trommel oder auch eine Mikrowellenbehandlung ist.

31. Verfahren nach Anspruch 29, dadurch gekennzeichnet, daß die thermische Behandlung, insbesondere die Kochextrusions-Behandlung, der man die Stärke-Verbindung unterwirft, bei einer Temperatur von höchstens etwa 130°C durchgeführt wird.

32. Verfahren nach Anspruch 31, dadurch gekennzeichnet, daß die thermische Behandlung bei einer Temperatur durchgeführt wird, die zwischen etwa 50 etwa 120°C liegt.

33. Verfahren nach einem der Ansprüche 27 bis 32, dadurch gekennzeichnet, daß die Behandlung, der man die Stärke-Verbindung unterwirft, in Gegenwart mindestens eines biologisch abbaubaren Polyesters durchgeführt wird, wobei die erhaltene Stärke-Verbindung schließlich auf irgendeine geeignete Weise mit mindestens einem Carbonsäuresalz in Kontakt gebracht wird.

34. Verfahren nach einem der Ansprüche 27 bis 32, dadurch gekennzeichnet, daß die Behandlung, der man die Stärke-Verbindung unterwirft, in Gegenwart mindestens eines Hydroxycarbonsäuresalzes durchgeführt wird, wobei die erhaltene Stärke-Verbindung schließlich auf irgendeine geeignete Weise mit mindestens einem biologisch abbaubaren Polyester in Kontakt gebracht wird.

35. Verfahren nach einem der Ansprüchen 27 bis 32, dadurch gekennzeichnet, daß die Behandlung, der man die Stärke-Verbindung unterwirft, in Gegenwart mindestens eines biologisch abbaubaren Polyesters und mindestens eines Hydroxycarbonsäuresalzes durchgeführt wird.

36. Verwendung einer thermoformbaren Zusammensetzung nach einem der Ansprüche 19 bis 25 oder einer solchen, wie sie nach einem der Ansprüche 26 bis 35 hergestellt worden ist, zur Herstellung von thermogeformten Gegenständen (Formkörpern).

## Claims

1. Thermoformable composition characterized in that it contains at least one starchy compound, at least one biodegradable polyester and at least one salt of hydroxycarboxylic acid.

2. Composition according to Claim 1, characterized in that the starchy compound is in a partially molten state.

3. Composition according to either of Claims 1 and 2, characterized in that it is capable of yielding a thermoformed article exhibiting a loss modulus tan δ the maximum value of which lies at a temperature not exceeding 150°C, especially approximately between 0 and 130°C.

4. Composition according to one of Claims 1 to 3, characterized in that the starchy compound is chosen from the group including ordinary, natural or hybrid starches originating from corn, from corn of high amylose content, from waxy corn, from wheat, rice, peas, potato, manioc, cuts or fractions which can be made or obtained from the said starches and any mixtures of at least any two of these products.

5. Composition according to one of Claims 1 to 3, characterized in that the starchy compound is chosen from the group including natural or hybrid starches modified by the chemical route, in particular by etherification, ionic or nonionic, esterification, crosslinking, oxidation, alkaline treatment and acidic and/or enzymatic hydrolysis.

6. Composition according to one of Claims 1 to 5, characterized in that the said biodegradable polyester is chosen from polylactic acid, polyglycolic acid, polyhydroxybutyric acid, polyhydroxypropionic acid, polyhydroxyvaleric acid, copolymers of at least two of the abovementioned polyesters and derivatives and salts of the abovementioned polymers and copolymers.

7. Composition according to Claim 6, characterized in that the said biodegradable polyester is polylactic acid or a polylactate such as a sodium polylactate.

8. Composition according to Claim 7, characterized in that the biodegradable polyester is chosen from polymers and oligomers based on D and/or L lactic acid exhibiting a molecular weight lower than 1 000 000, especially lower than 150 000 and the salts, such as the sodium salts, of the said polymers and oligomers.

9. Composition according to Claim 8, characterized in that the biodegradable polyester is chosen from the oligomers of D and/or L lactic acid exhibiting a molecular weight of approximately 500 to approximately 5000.

10. Composition according to one of Claims 1 to 7, characterized in that it exhibits a weight ratio of, on the one hand, starchy compound(s) to, on the other hand, biodegradable polyester(s) of between approximately 99/1 and 1/99, it being specified that account is taken of the dry weights introduced.

11. Composition according to Claim 10, characterized in that it exhibits a weight ratio of between 80/20 and 50/50.

12. Composition according to Claim 10, characterized in that it is based on polyester(s), in particular on polymer(s) of lactic acid or their salts, exhibiting a molecular weight greater than or equal to approximately 150 000.

13. Composition according to one of Claims 1 to 9, characterized in that it is based on polyester(s), in particular on polymer(s) or oligomer(s) of lactic acid or one of their salts, exhibiting a molecular weight lower than approximately 150 000 and in that the said composition exhibits a weight ratio of, on the one hand, starchy compound(s) to, on the other hand, biodegradable polyester(s) between approximately 99/1 and 1/99.

14. Composition according to Claim 13, characterized in that it exhibits a weight ratio of preferably between 99/1 and 70/30.

15. Composition according to Claim 13, characterized in that it is based on polymer(s) or oligomer(s) of lactic acid or their salts, exhibiting a molecular weight lower than approximately 50 000, and in that the said composition exhibits a weight ratio of, on the one hand, starchy compound(s) to, on the other hand, biodegradable polyester(s) of preferably between 98/2 and 80/20.

16. Composition according to Claim 15, characterized in that the polymer or oligomer exhibits a molecular weight lying between approximately 500 and approximately 5000.

17. Composition according to one of Claims 1 to 16, characterized in that the salt of hydroxycarboxylic acid is chosen from the group including salts of monohydroxy/monocarboxylic acids and the salts of polyhydroxy/monocarboxylic acids and any mixtures of at least any two of the said salts.

18. Composition according to Claim 17, characterized in that the salt of hydroxycarboxylic acid is an alkali or alkaline-earth metal salt of lactic acid, of gluconic acid, of maltobionic acid, of lactobionic acid or of glyceric acid.

19. Composition according to Claim 18, characterized in that the salt of hydroxycarboxylic acid is an alkali or alkaline-earth metal salt of lactic acid.

20. Composition according to Claim 19, characterized in that the salt of hydroxycarboxylic acid is sodium lactate.

21. Composition according to one of Claims 1 to 20, characterized in that it exhibits a weight ratio of, on the one hand, the sum of starchy compound(s) + biodegradable polyester(s) to, on the other hand, salt(s) of hydroxycarboxylic acid of between approximately 99/1 and 25/75, it being specified that account is taken of the solids contents introduced.

22. Composition according to Claim 21, characterized in that it exhibits a weight ratio of between 98/2 and 40/60.

23. Composition according to one of Claims 1 to 22, characterized in that it additionally contains at least one adjuvant, the said adjuvant being chosen from the group including extenders or fillers, plasticizers, water-repellent agents, lubricants, colorants, flame-retardants, antioxidants and fungicides.

24. Composition according to Claim 23, characterized in that it contains at least one adjuvant chosen from the group including urea and its derivatives, hydrogenated sugars, glycols, polyethylene and polypropylene glycols, glycerol and its derivatives.

25. Composition according to Claim 24, characterized in that the hydrogenated sugar is chosen from sorbitol, mannitol, maltitol, lactitol as well as the products which may contain at least one of the said hydrogenated sugars, especially hydrogenated starch hydrolysates.

26. Process for the preparation of a thermoformable composition according to Claim 1, characterized in that at least one starchy compound, a biodegradable polyester and a salt of hydroxycarboxylic acid are brought into contact at ambient temperature, as well as possible adjuvants.

27. Process for the preparation of a thermoformable composition according to Claims 1 and 2, characterized in that a starchy compound is subjected, in the presence or absence of a biodegradable polyester and/or of a salt of hydroxycarboxylic acid and optionally of one or more adjuvants of any kind, to a treatment capable of bringing it into a destructured or partially molten state, and in that, optionally, the starchy compound thus obtained is subsequently brought into contact with at least one biodegradable polyester, a salt of hydroxycarboxylic acid and optionally one or more adjuvants of any kind, unless they have already been introduced.

28. Process according to either one of Claims 26 and 27, characterized in that a starchy compound is subjected to a treatment capable of bringing it into a partially molten state.

29. Process according to Claim 28, characterized in that the treatment to which the starchy compound is subjected is a heat treatment optionally combining the action of ultrasonics and/or of pressure with that of temperature.

30. Process according to Claim 29, characterized in that the treatment is a treatment of baking-extrusion or of gelling on a drum, or else a microwave treatment.

31. Process according to Claim 29, characterized in that the heat treatment, in particular baking-extrusion, to which the starchy compound is subjected is performed at a temperature not exceeding approximately 130°C.

32. Process according to Claim 31, characterized in that the heat treatment is performed at a temperature situated between approximately 50°C and approximately 120°C.

33. Process according to any one of Claims 27 to 32, characterized in that the treatment to which the starchy compound is subjected is performed in the presence of at least one biodegradable polyester, the starchy compound obtained being subsequently brought into contact, by any suitable means, with at least one salt of hydroxycarboxylic acid.

34. Process according to any one of Claims 27 to 32, characterized in that the treatment to which the starchy compound is subjected is performed in the presence of at least one salt of hydroxycarboxylic acid, the starchy compound obtained being subsequently brought into contact, by any suitable means, with at least one biodegradable polyester.

35. Process according to any one of Claims 27 to 32, characterized in that the treatment to which the starchy compound is subjected takes place in the presence of at least one biodegradable polyester and of at least one salt of hydroxycarboxylic acid.

36. Use of a thermoformable composition according to one of Claims 19 to 25 or prepared according to one of Claims 26 to 35 for obtaining thermoformed articles.

FIG. 1

FIG. 2

FIG. 3